Europäisches Patentamt

European Patent Office

Office européen des brevets

(19)

(11) Publication number: **0 162 544**
**A1**

# (12) EUROPEAN PATENT APPLICATION

(21) Application number: **85301946.1**

(22) Date of filing: **20.03.85**

(51) Int. Cl.⁴: **C 04 B 24/38**

(30) Priority: **21.03.84 US 592127**

(43) Date of publication of application:
**27.11.85 Bulletin 85/48**

(84) Designated Contracting States:
**AT BE CH DE FR GB IT LI NL SE**

(71) Applicant: HERCULES INCORPORATED
Hercules Plaza
Wilmington Delaware 19894(US)

(72) Inventor: T'Sas, Harald Erwin
218 V. Boezelaerlaan
NL-2581 BB The Hague(NL)

(74) Representative: De Minvielle-Devaux, Ian Benedict
Peter et al,
CARPMAELS & RANSFORD 43, Bloomsbury Square
London WC1A 2RA(GB)

(54) Sprayable plasters.

(57) Improvements in interior sprayable wall plasters are effected by incorporating therein at least one hydroxypropylhydroxyethylcellullose having specified substitution levels as a water retention aid or thickener.

EP 0 162 544 A1

This invention relates to novel compositions useful as sprayable wall plasters containing at least one hydroxypropylhydroxyethylcellulose.

Natural gypsum, of which the chemical formula is $CaSO_4 \cdot 2H_2O$, is mined in a number of locations. By known processes this natural material is converted into the calcium sulphate hemi-hydrate, generally referred to as plaster of Paris. Commercially available plaster of Paris varies greatly in quality, purity and properties, depending on the origin and the process used for its manufacture.

Plaster of Paris has been widely used as one of the raw materials in the manufacture of plastering compounds which are applied to appropriate parts of buildings and other structures such as walls and ceilings either by a trowel or similar tools or by means of spraying.

Conventional sprayable plasters or as they are sometimes referred to, projection plasters, are mixtures of plaster of Paris with a minor proportion of a thickener for rheology control and water retention. The plaster of Paris may optionally contain calcium hydroxide. They may also contain small amounts of a modified starch, polyacrylamide or an acrylamide copolymer to further improve water retention and spray characteristics. In addition a minor amount of an air entrainment additive, such as sodium lauryl sulfate, may also be incorporated.

The dry plaster mixture is mixed briefly with water in specialized mixing equipment and applied to the surface of interior walls by pressurized spray. After several stages of troweling and finishing the spray-applied plaster to a smooth surface, the surface may be painted or finished with wallpaper.

The physical characteristics of a cured conventional plaster are determined by the rate of curing, and thus, by the rate of water removal therefrom during the curing operation. Any influence which affects these parameters by increasing the rate of water removal or by diminishing the water concentration in the plaster at the onset of the curing reaction can cause a deterioration of the physical properties of the plaster. The various stages of troweling and finishing the plaster also are adversely affected if the plaster drys too rapidly. Most strata to which these plasters are applied such as wallboard, cinderblock, or masonry, are porous and can lead to the difficulties just mentioned.

To overcome, or at least minimize, the above-mentioned water-loss problems, a small amount of a water-soluble polymer, such as, hydroxyethylcellulose, methylhydroxy-ethylcellulose, and methylhydroxypropylcellulose, have been added to the plaster composition as a water retention aid. Desirably, these polymers first create a high water uptake of the plaster, and then prevent the escape of the water from the plaster to the substrate to which it is applied by increasing the viscosity of the aqueous phase of the plaster mix, thus, maintaining the desired water concentration in the plaster during curing. In addition these polymers are intended to stablize the high air content in the plaster so that a smooth finish can be obtained. However, the above-mentioned water-soluble polymers often fail to provide and retain the desired water concentration and air content in the plaster and thus give a plaster having relatively poor spray characteristics and workability. As a result, plasters containing the above-mentioned thickeners are often uneven in application to the wall surface, dry too quickly and give a poor finish.

In yet another approach, unpurified water-soluble cellulose ethers, e.g. methylhydroxypropylhydroxyethyl- cellulose and hydroxypropylhydroxyethylcellulose, obtained by reacting cellulose, which has been mercerized with an alkali hydroxide, with suitable reactants and then neutralizing the reaction mixture of the resulting cellulose ether with an acid, the alkali salt of which has a set retarding action on a calcium sulphate plaster, thereby forming the alkali salt in situ in a ratio by weight of the cellulose ether to the alkali salt within the range from about 20:1 to about 1:1 (see U.S. Patent 3,936,313). This calcium sulphate plaster additive composition likewise failed to provide the desired results when incorporated in a calcium sulphate plaster.

This invention provides sprayable plasters comprising from about 99.95% to about 99% plaster of Paris, and from about 0.05% to about 1% of a water-retaining thickener, which when mixed with from about 25% to about 60% of its own weight of water, forms a plaster which is sprayable onto a substrate in thin layers, characterized in that the water-retaining thickener is at least one hydroxypropyl hydroxyethylcellulose having a hydroxyethyl substitution from about 0.3 to about 4.0 M.S. and a hydroxypropyl substitution of greater than 0.35 M.S. and having an ash content equal to or less than 5%. Preferably the hydroxypropyl substitution is at least 0.6 M.S. Most preferably, the hydroxyethyl M.S. will be from about 0.7 to 1.8, and the hydroxypropyl M.S. will be from about 0.6 to about 1.2. The total M.S. of these two substituent groups should be sufficient to give a hydroxypropylhydroxyethylcellulose having a high Brookfield viscosity, i.e., at least 100 centipoise (cps) at 1% aqueous solution at 23°C, preferably from 2000 to about 4000 cps at 1% aqueous solution. Generally, the total M.S. of these two substituent groups is from about 1.0 to about 5.0.

The designation M.S. refers to the average number of moles of hydroxyethyl or hydroxypropyl substituent groups combined per cellulosic anhydroglucose unit.

The particle size of the hydroxypropylhydroxyethylcellulose is also important since the best results are obtained if a hydroxypropylhydroxyethylcellulose having a fine particle size distribution is used. The preferred particle size distribution is one where from about 85% to about 95% of the particles pass through a 140 mesh screen.

Such a fine particle size of the hydroxypropylhydroxyethylcellulose enables the polymer to dissolve quickly in water thereby providing for high water uptake, rapid viscosity development, and good water retention in the wet plaster. This is desirable because only a short mixing time is allowed in most sprayable plaster application equipment.

When compared with the sprayable plasters prepared with the aforementioned prior art cellulose derivatives as the water retention agent, the sprayable plasters of this invention are improved in texture, smoothness, ease of finishing, air entrainment, open time, water uptake and trowelability, which are the important parameters used widely in the art to characterize sprayable plasters. They also show improved sprayability and have a low water loss.

The hydroxypropylhydroxyethylcellulose which can be used as thickener in the plasters of this invention is prepared by reacting ethylene oxide and propylene oxide with cellulose in a strongly alkaline medium. Specific techniques for carrying out the etherification are well known in the art and any known procedure can be employed.

In the alternative, a hydroxyethylcellulose can be etherified with a propylene oxide in a strongly alkaline medium. In this case, the hydroxyethylcellulose can be substantially any grade having M.S. from about 0.3 to about 4.0. The preferred materials are those having a Brookfield viscosity from about 100 to about 5000 cps. in a 1% water solution at 23°C. Materials of higher and lower viscosity can also be used advantageously, however.

Regardless of the method used to prepare the hydroxypropylhydroxyethylcellulose of this invention, the product is neutralized with an acid, preferably nitric acid or mixture of acids, such as nitric and acetic acid, and then washed with an aqueous solution of acetone containing about 90% acetone to remove the reaction by-products, such as alkali metal salts, ethylene glycol, and propylene glycol, such that the final purified product has an ash content of 5% or less. Preferably, the product has an ash content of from about 2.9 to 4.9. If the ash content exceeds 5%, the hydroxypropylhydroxyethylcellulose does not function as a thickener or as a water retention aid in sprayable plasters.

Any cellulose furnish can be used to prepare the hydroxyethylcellulose, for example, wood pulp, cotton linters of varying viscosities, and the like.

A sprayable plaster based on plaster of Paris can be prepared containing only the plaster and the water retention aid of the instant invention. In such a case the proportion of thickener in the plaster would typically range from 0.05% to about 1%, preferably from about 0.1 to about 0.2%, by weight of the dry composition.

In addition, the plaster of Paris may contain up to 5% of calcium hydroxide.

The dry plaster composition may also contain hydroxypropyl guar, in an amount from 0.01% to 1.0% by weight of the dry composition. Preferably the hydroxypropyl guar has an M.S. from about 0.2 to about 0.6.

A small amount of a modified starch, a polyacrylamide or of a copolymer of acrylamide, i.e., about 1% to about 30%, based by weight on the thickener, may be used to improve sag resistance, to contribute to higher water uptake and to provide better adhesion of the wet plaster to the substrate.

An air-entraining agent, such as sodium lauryl sulfate and sodium stearates, in an amount from 0.001% to about 1.0% by weight of the dry composition may also be added.

Thus, the dry plaster mixture of this invention comprises from about 99.95% to about 99% plaster of Paris and from about 0.05% to about 1% of at least one hydroxypropylhydroxyethylcellulose, preferably from about 99.9% to about 99.8% plaster of Paris and from about 0.1% to about 0.2% of at least one hydroxypropylhydroxyethylcellulose.

This dry plaster mixture, when added to water, forms a plaster which is sprayable onto a substrate in layers on the order of 1/4 inch to 2 inches, typically 1/2 inch to 1 inch. The amount of water used is such that the resultant plaster mixture is sprayable, yet will not be so thin as to slide down the surface of the wall when applied. In general, from about 25% to about 60% water, by weight based on the weight of the dry mixture, gives good results.

In the examples which follow, various embodiments of the sprayable plaster compositions of this invention are illustrated. In Examples 1 through 4, the formulation shown in Table I is employed except that a hydroxypropylhydroxyethylcellulose having the hydroxyethyl M.S. and the hydroxylpropyl M.S. shown in Table II for the particular example in question is used as the thickener.

### Table I

| Components | Parts by weight |
| --- | --- |
| Plaster or Paris | 99.85 |
| Thickener | 0.15 |
| Water | 44 |

The sprayable plaster compositions of this invention are prepared by tumble blending the first two components of Table I to a substantially homogeneous state. The dry mix is added to the water in specialized mixing equipment, such as a Putzmeister mixing machine, at the job site, and the wet mix is immediately pumped and sprayed by the machine through a spray nozzle onto the wall surface. The plaster then undergoes successive troweling and finishing operations over the course of the next 1 to 2 hours to give a smooth finish.

Sometimes the plaster used by the construction industry is so fresh that it is not completely cooled when it is dry blended with the thickener. This is especially true in the summer time, when cooling occurs slowly. Under these conditions the prior art thickeners, such as methylhydroxypropylcellulose, show poor aqueous solubility due to the residual heat of the warm plaster. The advantage of hydroxypropylhydroxyethylcellulose over the prior art thickeners is that the solubility of the hydroxypropylhydroxyethylcellulose in water is not impaired by blending with a warm plaster. The reduction in the solubility of the prior art thickeners, such as methylhydroxypropylcellulose, at high temperature results in a loss of water retention which makes the plaster mixture difficult to work with especially when finishing.

The properties of the hydroxypropylhydroxyethylcellu-loses in sprayable plasters were evaluated by the following test methods.

Water loss is a measure of the amount of bleeding or water loss that the composition experiences when in contact with an absorptive surface. A low water loss value is desirable since excessive water loss can cause low strength and cracking of the dried plaster. The amount of water loss is measured by stapling 10 circles of 9.0 cm no. 40 Whatman filter paper together and weighing them. The filter paper stack is then placed on a flat surface and covered with one 11.0 cm. no. 4 Whatman filter paper. A 2" diameter by 3" long cylinder is placed on top of this filter paper stack. The cylinder is filled to the top with wet plaster mix. After exactly 1 minute, the cylinder and the one no. 4 filter paper are removed. The filter paper stack is weighed to determine the water gain, which is expressed as water loss in grams (gms) from the plaster composition.

The amount of air entrained in the composition is determined by graviometrically. The wet sprayable plaster mix is placed in a cylinder of known volume and tapped one hundred times to remove any large air bubbles. The mix at the top of the cylinder is sawed off to give a known volume of mix. The weight of the mix is measured. Taking the specific gravity of the wet mix and the known specific gravity of the solids in the mix, the air volume of the wet mix is calculated. High air content in the plaster is desirable since this leads to a smoother and creamier consistency.

Sag resistance and spray characteristics are subjectively determined.

The properties of the sprayable plasters prepared with hydroxypropylhydroxyethylcellulose are shown in Table II below.

TABLE II

Properties of Sprayable Plasters Prepared with Hydroxypropylhydroxyethylcellulose (HPHEC)

| Example No. | HPHEC HE M.S. | HP M.S. | Methyl[1] D.S. | Water Loss (gms.) | Air Entrainment % by Volume | Sag[2] Resistance | Spray[2] Characteristics |
|---|---|---|---|---|---|---|---|
| Control 3 | 3.20 | -- | -- | 1.50 | 3 | P | F |
| Control 4 | 0.10 | -- | 1.38 | 1.20 | 5 | F | F |
| Control 5 | -- | 0.07 | 1.59 | 1.10 | 5 | F | F |
| 1 | 0.71 | 0.70 | | 1.04 | 11 | G | F |
| 2 | 1.23 | 0.95 | | 1.00 | 9 | E | E |
| 3 | 1.36 | 1.10 | | 1.05 | 10 | E | E |
| 4 | 1.46 | 1.12 | | 0.99 | 15 | E | E |

[1]Average number of methyl groups per cellulosic anhydroglucose unit.

[2]E = excellent; G = good; F = fair; P = poor; VP = very poor

[3]Using same formula as Table I with a hydroxyethylcellulose as the thickener.

[4]Using same formula as Table I with a methylhydroxyethylcellulose as the thickener.

[5]Using same formula as Table I with a methylhydroxypropylcellulose as the thickener.

Features, advantages and other specific embodiments of this invention will become readily apparent to those exercising ordinary skill in the art after reading the foregoing disclosures. In this regard, while specific embodiments of this invention have been described in considerable detail, variations and modifications of these embodiments can be effected without departing from the spirit and scope of the invention as disclosed and claimed.

What I claim and desire to protect by Letters Patent is:

1. A dry plaster composition having, by weight, from about 99.95% to about 99% of a plaster of Paris, and from about 0.05% to about 1.0% of a water-retaining thickener, said dry composition being capable, when mixed with from about 25% to about 60% of its own weight of water, of producing a plaster which can be sprayed in thin layers on a substrate, characterized in that the water-retaining thickener is at least one hydroxypropylhydroxyethylcellulose having hydroxyethyl M.S. from about 0.3 to about 4.0 and hydroxypropyl M.S. greater than 0.35 and having an asn content equal to or less than 5%.

2. The composition of claim 1 wherein the hydroxypropylhydroxyethylcellulose has a hydroxypropyl M.S. of at least 0.6.

3. The composition of claim 1 wherein the hydroxypropyl hydroxyethyl cellulose has a hydroxyethyl M.S. from about 0.7 to about 1.8 and a hydroxypropyl M.S. from about 0.6 to about 1.2.

4. The composition of claim 1 which further comprises from about 0.01% to about 1.0%, by weight of the dry composition, of a hydroxypropyl guar.

5. The composition of claim 2 which further comprises from about 0.01% to about 1.0%, by weight of the dry composition, of a hydroxypropyl guar.

6. The composition of claim 3 which further comprises from about 0.01% to about 1.0%, by weight of the dry composition, of a hydroxypropyl guar.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-2 411 028 (MODOKEMI A.B.) <br> * Claims 1,3,5 * <br><br>--- | 1 | C 04 B 24/38 |
| A | DE-A-1 126 792 (I.C.I. LTD.) <br> * Claim 1 * <br><br>--- | 1 | |
| A | US-A-4 028 127 (MASKE et al.) <br><br> * Claim 1 * <br><br>----- | | |

|  |
|---|
| TECHNICAL FIELDS SEARCHED (Int. Cl.4) |
| C 04 B 24/38 |

The present search report has been drawn up for all claims

| Place of search | Date of completion of the search | Examiner |
|---|---|---|
| BERLIN | 11-06-1985 | STROUD J.G. |